# EUROPEAN PATENT SPECIFICATION

(11) **EP 2 072 235 B1**
(45) Date of publication and mention of the grant of the patent: **15.01.2014**
(21) Application number: 08171064.2
(22) Date of filing: 09.12.2008
(51) Int. Cl.: B29D 30/06, B29D 30/72, B29C 33/04, B29C 35/02, B29C 35/04

(54) **Tire mold**
Reifenform
Moule d'un pneu

(30) Priority: 20.12.2007 US 15386 P
(43) Date of publication of application: 24.06.2009
(73) Proprietor: The Goodyear Tire & Rubber Company, Akron, OH 44316-0001 (US)
(72) Inventor: Ouyahia, Yacine, 7254 Bereldange (LU); Pierre, Christophe Jean Alexis, 6790 Aubange (BE); Dumont, Nicolas Daniel, 6760 Ethe (BE)
(74) Representative: Kutsch, Bernd

(56) References cited:
- EP-A- 1 172 198
- EP-A- 1 468 814
- DE-B- 1 160 606
- JP-A- 07 195 370

## Description

### Field of the Invention

The present invention relates to a mold for a pneumatic radial tire, and more particularly, to a segmented tire mold.

### Background of the Invention

Tire molds for molding pneumatic tires are typically constructed of steel or aluminum, and heated by steam platens or by placing the molds in potheaters. Thermal conduction is usually relied upon to transfer the heat from the heat source to the tread and sidewall forming surfaces. It is desirable to maximize the heat conduction to the tread and sidewall forming surfaces. If the thermal conduction is less than optimum, it will require additional cure time and energy costs resulting in reduced production capacity for the mold and higher operating costs. Inefficient thermal conduction can also result in temperature non-uniformity in the mold. The time to cure a tire is limited by the point of least cure on the tire, which is typically located on the undertread. For certain types of tires such as run flat tires, the point of least cure is often located in the bead apex area. Thus if this area could be cured quicker, the entire time of the process may be reduced. Thus an improved mold is desired which can heat the tire more quickly, uniformly and efficiently.

EP-A- 1 172 198 describes a mold comprising an inner face for molding a tire tread and one or more sidewall plates. A similar mold comprising interior channels in the sidewall plate is described in DE-A- 1 160 606. A further mold for molding a tire is described in EP-A-1 468 814.

JP-A- 07-195370 describes a mold in accordance with the preamble of claim 1.

### Summary of the Invention

The invention relates to a mold according to claim 1.

Dependent claims refer to preferred embodiments of the invention.

### Brief Description of the Drawings

The invention will be described by way of example and with reference to the accompanying drawings in which:
FIG. 1 is a partial cutaway view of a mold assembly showing only the segments, sidewall plates and mold rings;
FIG. 2 is a rear view of two segments;
FIG. 3 is a partial cutaway view of a complete tire mold assembly;
FIG. 4 is a partial cutaway view of the mold assembly of FIG. 1, with the actuator ring removed;

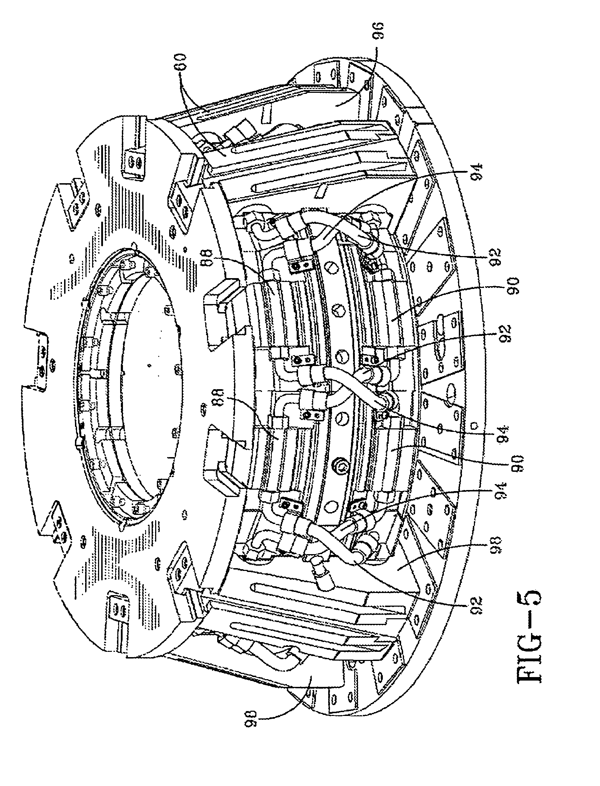

FIG. 5 is a perspective view of the mold shown in Fig. 4, with a portion of the slide blocks removed for clarity;

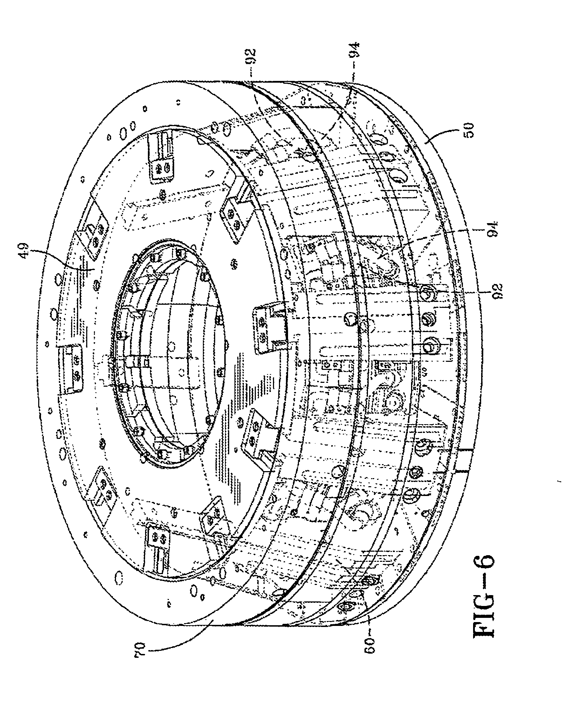

FIG. 6 is a perspective view of the entire assembly with the inner parts of the mold shown in phantom;
FIG. 7 is a perspective view of the flexible steam belt of the invention;
FIG. 8 is a rear view of a second embodiment of two segments;

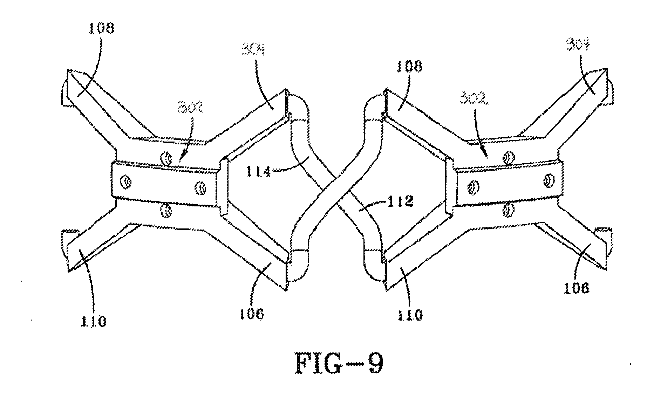

FIG. 9 is a rear view of a coupling assembly and two cross members interconnecting the couplings.
FIG. 10 is a rear view of two segments showing the channels for insertion of the coupling assembly;
FIG. 11 is a perspective view of a lower sidewall plate and bottom container plate of the present invention;
FIG. 12 is a bottom perspective view of the lower sidewall plate of FIG. 11;
FIG. 13 is a cross-sectional view of the lower sidewall plate and a portion of the bottom container plate;
FIG. 14 is a top view of the lower sidewall plate and the bottom container plate;
FIG. 15 is a bottom view of the lower sidewall plate and the bottom container plate.

### Definitions

"Axial" and "axially" means the lines or directions that are parallel to the axis of rotation of the tire or tire mold.

"Circumferential" means lines or directions extending along the perimeter of the surface of the annular tread mold perpendicular to the axial direction.

"Radial" and "radially" mean directions radially toward or away from the axis of rotation of the tire or tire mold.

"Sidewall" means a portion of a tire between the tread and the bead.

### Detailed Description of the Invention

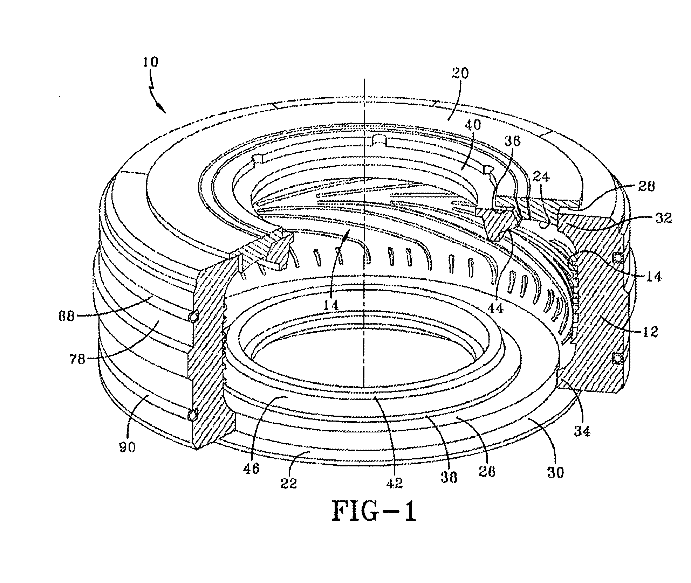

Figure 1 illustrates a mold assembly 10. The mold assembly 10 comprises a plurality of segments 12 which are arranged to form an annular ring when assembled together. The outer tread surface of a tire is formed by the inner molding surface 14 of the segments 12, which have a plurality of lands and grooves to mold the tread pattern in a green tire. The mold segments 12 may be radially movable to allow assembly and disassembly of the mold about a green tire.

The mold assembly 10 further comprises a first and second sidewall plate 20, 22 for molding the sidewalls of the tire (not shown). Each sidewall plate 20, 22 has an inner mold surface 24, 26 for molding the tire sidewall, and joins with the segments 12 to form a smooth continuous surface from the tire tread to the sidewall. Each sidewall plate 20, 22 has an optional radially outer lip 28, 30 forming an L shaped recess for receiving a first and second flanged end 32, 34 of the segment therein. Each sidewall plate 20, 22 further comprises an optional radially inner extension or lip forming a second L shaped recess 36, 38 for receiving a mold bead area 40, 42 therein. Each bead ring 40, 42 has a radiused portion 44, 46 for receiving a bead ring of a green tire thereon. The upper and lower sidewall plate 20, 22 together with the plurality of tread segments 12 and the top and bottom bead rings 40, 42 cooperate to define a mold cavity for molding a green tire.

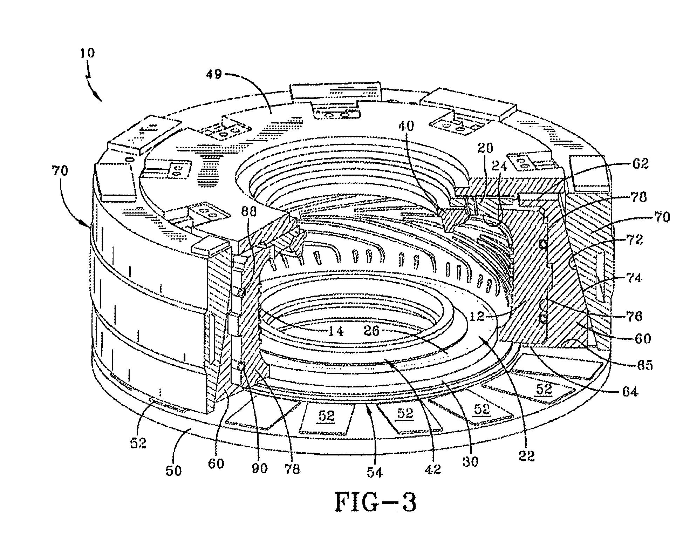

The mold assembly 10 is typically housed in an optional container housing 49 as shown in Figure 3. The container 49 typically includes a bottom container plate 50 having a plurality of optional wear pads 52 thereon. The wear plate 50 has an inner annulus 54 for supporting the sidewall plate 22 and bead ring 42 thereon as shown in Figure 3. The segments 12 are shown positioned about the sidewall plate 22. Surrounding the segments 12 are a plurality of slide blocks 60. The slide blocks 60 have flanged ends 62, 64 for receiving and supporting the segments 12 therein. The slide blocks 60 have a top and a bottom surface 65 for contacting the container plates 50 and wear plates 52. The slide blocks 60 are slidable in a radial direction. The container housing further comprises an annular actuating ring 70. The inner radial surface 72 of the actuating ring 70 is angled for engagement with an outer angled surface 74 of slide blocks 60. As the actuating ring 70 is lowered, the inner radial surface 72 of the actuating ring engages the outer surface 74 of slide blocks, causing the slide blocks to slide radially inward. The camming action of the actuator ring 70 moves the slide blocks 60 radially inward. As the slide blocks move radially inward, the radially inner surface 76 of the slide block engages the outer radial surface 78 of the adjacent segment, moving the segment radially inward as the actuating ring is lowered into position.

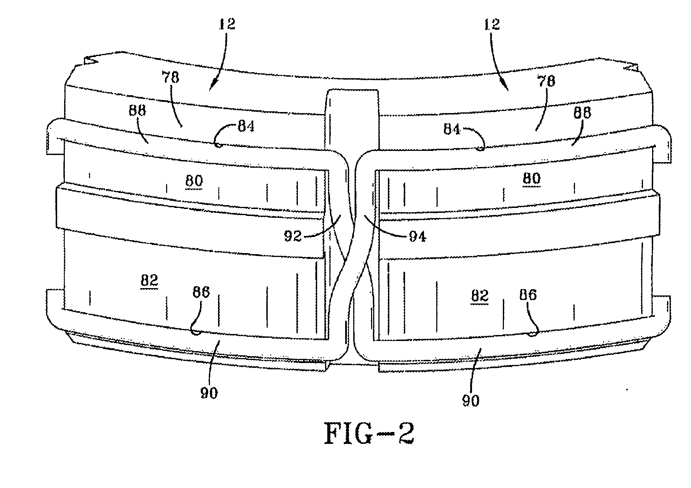

Figure 2 illustrates a rear view of two of the tread mold segments. The tread mold segments 12 have an outer radial surface 78 having a first or upper portion 80 and a second or lower portion 82. The first and second portions 80, 82 further comprise an open channel 84, 86 for receiving a tubular member 88, 90 respectively, therein. The tubular member 88, 90 may be flexible. As shown in Figure 2, the tubular member is oriented for example, along the circumferential direction although other orientations may be utilized. It is preferred that the channel be deep enough so that the tubular member 88, 90 is flush or recessed when mounted in the channel. The open channels 84, 86 may be located in other locations such as the top and bottom surfaces of the tread segments or other location as desired.

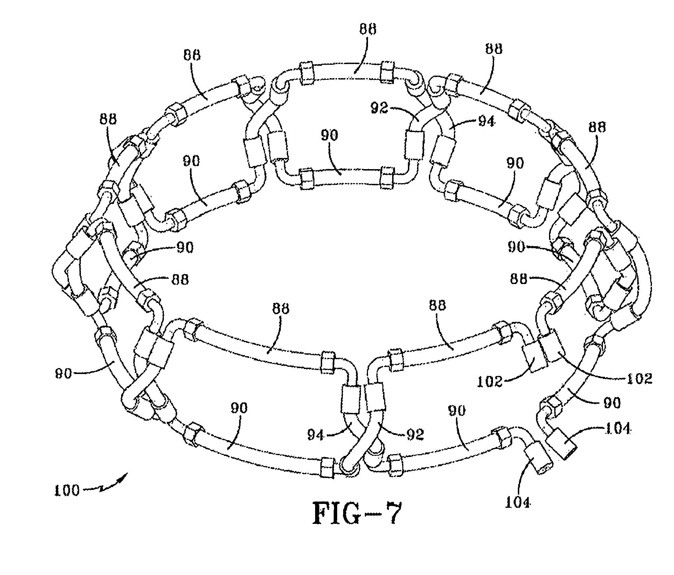

Figure 7 illustrates the complete manifold assembly 100, wherein the mold has been removed for clarity. As shown in Figure 7, the manifold assembly 100 comprises one or more inlet ports 102 and one or more outlet ports 104. Fluid such as steam enters the inlet port 102 and is routed through tubular members 88, 90. Tubular members 88, 90 are received in channels 84, 86 of a segment 12 and function to heat the segments by conduction of heat from the fluid flowing in the tubular segments 88, 90. A cross member 92 connects tubular member 88 on a first segment 12 to a lower tubular member 90 on an adjacent segment 12'. A second cross member 94 connects tubular member 88 to lower tubular member 90 on an adjacent segment. The cross members 92, 94 cross over each other where the segments are joined. Preferably the cross members 92, 94 are made of strong, flexible material such as polytetrafluorethylene (PTFE) reinforced with a stainless steel braid. This connection pattern is repeated for each segment. In the last segment, the upper and lower hose is joined together forming an outlet port. Because the segments move radially inward and outward, the hose segments must be flexible to accommodate the movement. As shown in Figure 7, the upper tubular members 88 form a circle and are not joined together. The lower tubular members 90 also form a circle although they are not directly connected together.

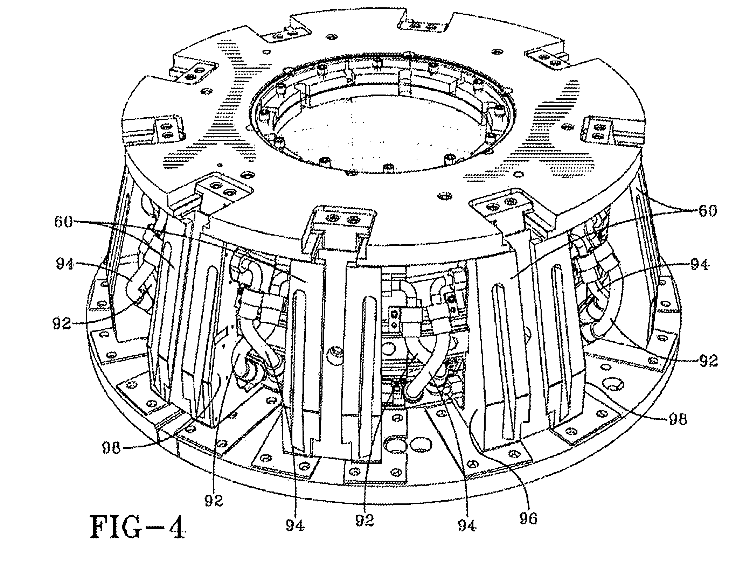

Figure 4 illustrates the assembled mold with the actuating ring removed. The slide blocks 60 as shown have a reduced circumferential width so they appear staggered apart, and side faces 96,98 are not in contact with either other when the mold is assembled.

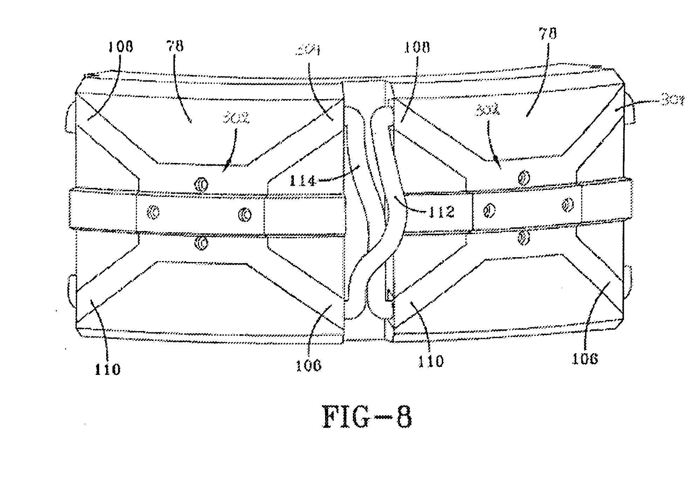

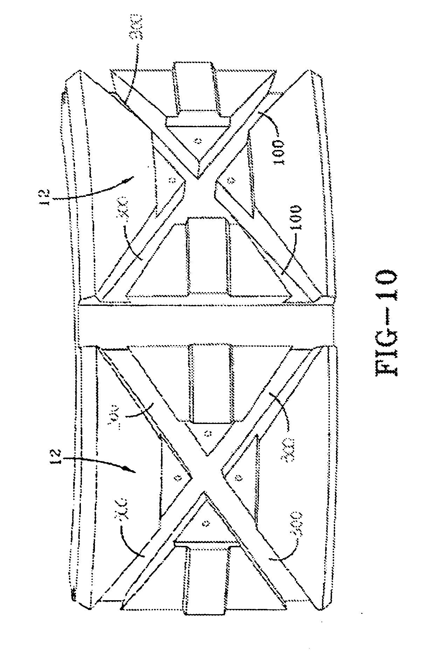

Figure 8 illustrates the outer radial surface 78 of the segments 12. As shown in Figure 10, the outer radial surface of the segments 12 have an X shaped channel 300. Received in the X shaped channel is an X shaped coupling 302. The X shaped coupling has two ports 304, 106 on one side, and two ports 108, 110 on the other side. An X shaped coupling is received in the channel of each segment. The couplings are connected together by cross members 112, 114. Cross member 112 joins upper coupling port 108 to lower coupling port 106 located on an adjacent coupling. Cross member 114 joins upper coupling port 304 to lower coupling port 110 of an adjacent coupling. The X shaped couplings on each segment are thus connected together with the cross members forming a manifold to conduct a fluid medium therein. The fluid medium may be steam or other fluid as desired. The invention is not limited to the X shaped couplings, as other shapes would work for the invention.

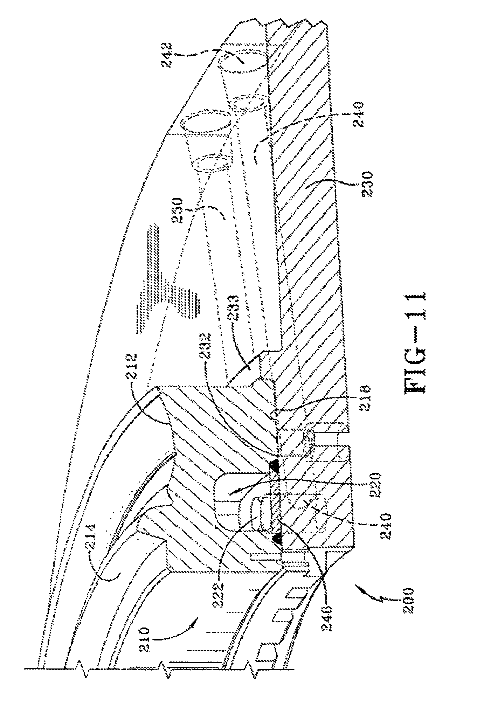

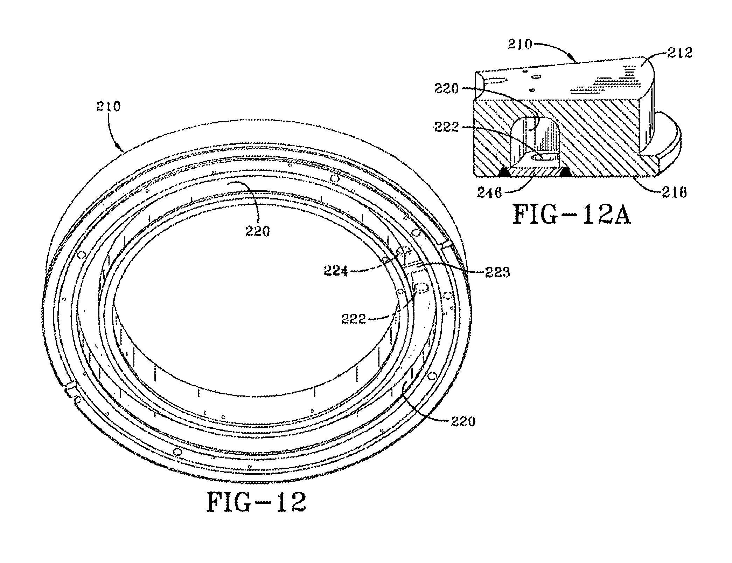

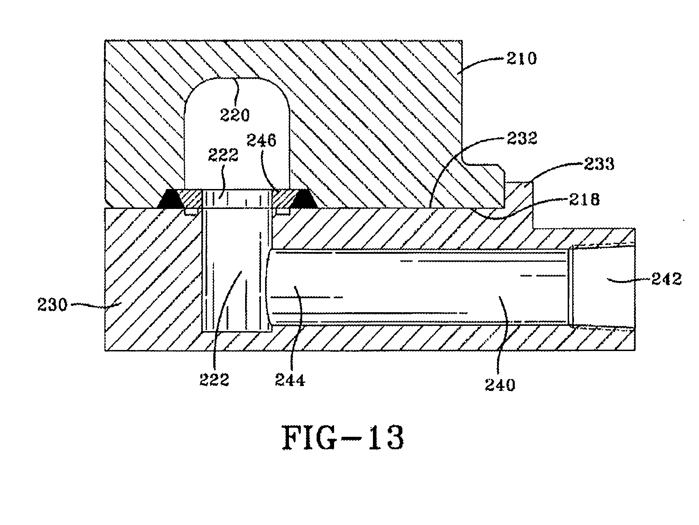

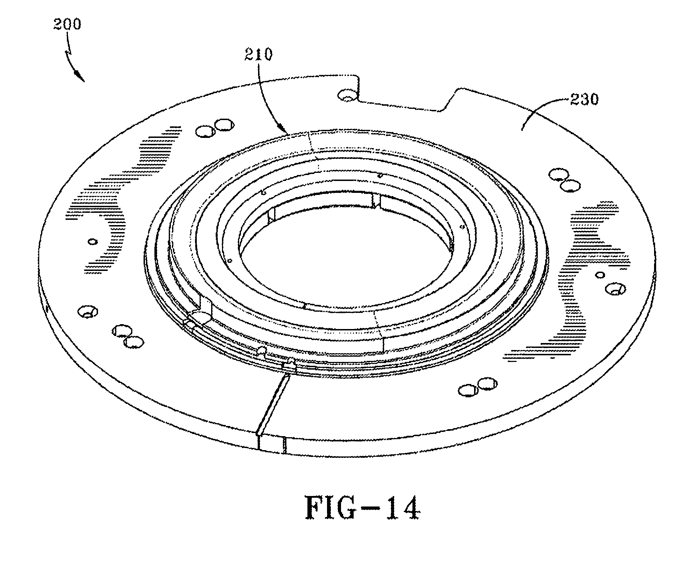

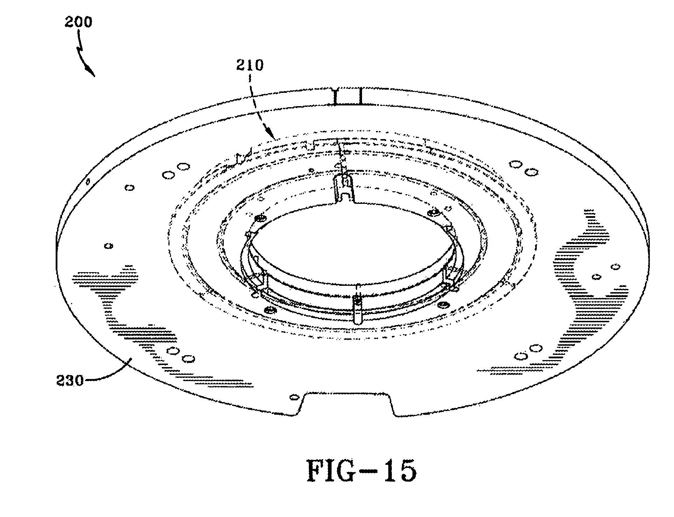

An example of a mold according to the present invention is shown in Figures 11 -15. Figure 11 illustrates a sidewall plate assembly 200 suitable for use in any type of conventional mold having a sidewall plate, whether segmented or not. The mold sidewall plate of the present invention may be used in any of the molds described above. The assembly comprises a mold sidewall plate 210 which includes an outer mold surface 212 for mating with the bead area of a green tire to be cured The mold sidewall plate 210 further comprises a channel 220 which has an opening on an inner surface 218 and forming a recess which extends radially outward towards surface 212. The channel 220 is preferably annular and is preferably located opposite the bead ring split 214. However, the channel may have other shapes and locations. The channel 220 has an inlet 222 and an outlet 224. Preferably the inlet is located adjacent the outlet but separated by a divider wall 223, so that a heat conducting medium such as steam can traverse almost the entire annular passageway of the sidewall plate 210. Figure 12 illustrates one example of the channel configuration. As shown in Figure 11, the mold sidewall plate 210 cooperates with a lower plate 230 in order to form an enclosed annular passageway 220. The lower plate 230 has an upper face 232 having a radial lip 233 for seating the inner surface 218 of the sidewall plate 210 therein.

The lower plate 230 further comprises inlet and outlet channels 240, 250 which may be oriented in a radial direction. The inlet channel 240 has an inlet end 242 for receiving a fluid heat transfer medium such as steam, and an outlet end 244 in fluid communication with the inlet 222 of channel 220. A gasket or other sealing means 246 may be provided between the channel inlet 242 and the mold bead inlet. Thus the upper face of the lower plate together with the channel 220 form an annular shaped cavity for conducting a heat transfer medium such as steam, therein. The steam or medium is conveyed to the cavity via the lower plate inlet channel 240. The heat conducting medium circulates around the sidewall plate in the annular channel 220. The steam or fluid medium exits the ring 210 via outlet 224 and into channel 250 on lower plate. Alternatively, the heat transfer medium could also be conveyed to an opening in the inner annulus of the mold bead ring. The annular cavity could also be formed completely within the sidewall plate 210, with channel openings on the inner annulus.

The sidewall plate of the present invention can be used in conventional molds which have a sidewall plate. The invention can be utilized in both the upper and lower sidewall plate positions, or just one (for example, the lower) position. The invention could also be extended to the mold bead rings.

## Claims

1. A mold comprising an inner face (14) for molding a tire tread, the mold (10) comprising one or more sidewall plates (210), wherein at least one of said sidewall plates (210) comprises a recessed channel (220) having a inlet and an outlet (222, 224), said at least one sidewall plate (210) having an inner surface (218) in engagement with a surface of a further plate (230), and wherein the recessed channel (220) and the surface of the further plate (230) form a fluid manifold for circulating a fluid medium in said recessed channel (220), **characterized in that** the sidewall plate (210) has an outer mold surface (212) mating with the bead area of a green tire when cured in the mold and **in that** sidewall plate (210) comprises a projection or bead ring split (214) and the recessed channel (220) is located opposite the projection or bead ring split (214) of the sidewall plate (210).

2. The mold of claim 1 wherein the mold comprises two sidewall plates (210) on opposite sides of the mold (10),
(i) wherein both sidewall plates (210) comprise a respective recessed channel (220) having an inlet and an outlet (222, 224), said two sidewall plates (210) each having an inner surface (218) in engagement with a surface of a respective further plate (230), wherein the respective recessed channel (220) and the surface of the respective further plate (230) form a fluid manifold for circulating a fluid medium in the respective recessed channel (220); or
(ii) wherein one of said two sidewall plates (210) comprises an interior channel having an inlet and an outlet (222, 224), said interior channel forming fluid manifold for circulating a fluid medium within this sidewall plate (210), and wherein the other one of said two sidewall plates (210) comprises a recessed channel (220) having an inlet and an outlet (222, 224), said sidewall plate (210) having an inner surface (218) in engagement with a surface of a further plate (230), wherein the recessed channel (220) and the surface of the further plate (230) form a fluid manifold for circulating a fluid medium in said recessed channel (220).

3. The mold of at least one of the previous claims wherein the recessed channel (220) and the surface of the further plate (230) form an enclosed annular fluid passageway.

4. The mold of at least one of the previous claims wherein the further plate (230) has a radial lip (233) for seating an inner surface (218) of the sidewall plate (210) therein.

5. The mold of at least one of the previous claims wherein a sealing means (246) is provided between the sidewall plate (210) and the further plate (230).

6. The mold of at least one of the previous claims wherein the at least one sidewall plate comprises a sidewall plate element and a bead ring element (214) attached to the sidewall plate element, and wherein
(i) the sidewall plate element comprises an interior channel having an inlet and an outlet, said interior channel forming a fluid manifold for circulating a fluid medium within the sidewall plate element; and/or
(ii) the bead ring element and/or the sidewall plate element comprises a recessed channel having an inlet and an outlet, the sidewall plate element having a surface in engagement with a surface of the bead ring element, the recessed channel forming a fluid manifold for circulating a fluid medium.

7. The mold of at least one of the previous claims wherein the interior channel and/or the recessed channel (220) is annular.

8. The mold of at least one of the previous claims wherein the interior channel and/or the recessed channel (220) channel is at least substantially annular and extends circumferentially with regard to the respective sidewall plate in the range of 320 to 350 degrees.

9. The mold of at least one of the previous claims wherein the inlet (222) is connected to an inlet channel (240) and/or the outlet (224) is connected to an outlet channel (250).

10. The mold of claim 9 wherein the inlet channel (240) and/or the outlet channel (250) extends within a plate or within the further plate (230).

11. The mold of at least one of the previous claims wherein the mold (10) comprises a plurality of segments (12) arranged to form an annular cavity to mold a tire.

## Patentansprüche

1. Formwerkzeug, umfassend eine Innenseite (14) zur Formwerkzeugbehandlung einer Reifenlauffläche, wobei das Formwerkzeug (10) ein oder mehrere Seitenwandplatten (210) umfasst, wobei mindestens eine der Seitenwandplatten (210) einen versenkten Kanal (220) mit einem Einlass und einem Auslass (222, 224) umfasst, wobei die mindestens eine Seitenwandplatte (210) eine Innenfläche (218) in Eingriff mit einer Oberfläche einer weiteren Platte (230) aufweist, und wobei der versenkte Kanal (220) und die Oberfläche der weiteren Platte (230) einen Fluidverteiler zum Zirkulieren eines Fluidmediums in dem versenkten Kanal (220) bilden, **dadurch gekennzeichnet, dass** die Seitenwandplatte (210) eine äußere Formwerkzeugoberfläche (212) aufweist, die mit dem Wulstbereich eines Reifenrohlings ineinanderpasst, wenn letzterer in dem Formwerkzeug vulkanisiert wird, und dass die Seitenwandplatte (210) eine(n) Vorsprung oder Wulstringtrennung (214) aufweist und der versenkte Kanal (220) sich gegenüber dem Vorsprung oder der Wulstringtrennung (214) der Seitenwandplatte (210) befindet.

2. Formwerkzeug nach Anspruch 1, wobei das Formwerkzeug zwei Seitenwandplatten (210) an gegenüberliegenden Seiten des Formwerkzeugs (10) umfasst,
(i) wobei beide Seitenwandplatten (210) einen jeweiligen versenkten Kanal (220) mit einem Einlass und einem Auslass (222, 224) umfassen, wobei die zwei Seitenwandplatten (210) jede eine Innenfläche (218) in Eingriff mit einer Oberfläche einer jeweiligen weiteren Platte (230) aufweisen, wobei der jeweilige versenkte Kanal (220) und die Oberfläche der jeweiligen weiteren Platte (230) einen Fluidverteiler zum Zirkulieren eines Fluidmediums in dem betreffenden versenkten Kanal (220) bilden; oder
(ii) wobei eine der zwei Seitenwandplatten (210) einen inneren Kanal mit einem Einlass und einem Auslass (222, 224) umfasst, wobei der innere Kanal einen Fluidverteiler zum Zirkulieren eines Fluidmediums in dieser Seitenwandplatte (210) bildet, und wobei die andere der zwei Seitenwandplatten (210) einen versenkten Kanal (220) mit einem Einlass und einem Auslass (222, 224) umfasst, wobei die Seitenwandplatte (210) eine Innenfläche (218) in Eingriff mit einer Oberfläche einer weiteren Platte (230) aufweist, wobei der versenkte Kanal (220) und die Oberfläche der weiteren Platte (230) einen Fluidverteiler zum Zirkulieren eines Fluidmediums in dem versenkten Kanal (220) bilden.

3. Formwerkzeug nach mindestens einem der vorgenannten Ansprüche, wobei der versenkte Kanal (220) und die Oberfläche der weiteren Platte (230) einen eingeschlossenen ringförmigen Fluiddurchgang bilden.

4. Formwerkzeug nach mindestens einem der vorgenannten Ansprüche, wobei die weitere Platte (230) eine radiale Lippe (233) zum darin Auflegen einer Innenfläche (218) der Seitenwandplatte (210) aufweist.

5. Formwerkzeug nach mindestens einem der vorgenannten Ansprüche, wobei ein Dichtungsmittel (246) zwischen der Seitenwandplatte (210) und der weiteren Platte (230) vorgesehen ist.

6. Formwerkzeug nach mindestens einem der vorgenannten Ansprüche, wobei die mindestens eine Seitenwandplatte ein Seitenwandplattenelement und ein an dem Seitenwandplattenelement befestigtes Wulstringelement (214) umfasst, und wobei
(i) das Seitenwandplattenelement einen inneren Kanal mit einem Einlass und einem Auslass umfasst, wobei der innere Kanal einen Fluidverteiler zum Zirkulieren eines Fluidmediums in dem Seitenwandplattenelement bildet; und/oder
(ii) das Wulstringelement und/oder das Seitenwandplattenelement einen versenkten Kanal mit einem Einlass und einem Auslass umfasst, wobei das Seitenwandplattenelement eine Oberfläche in Eingriff mit einer Oberfläche des Wulstringelements aufweist, wobei der versenkte Kanal einen Fluidverteiler zum Zirkulieren eines Fluidmediums bildet.

7. Formwerkzeug nach mindestens einem der vorgenannten Ansprüche, wobei der innere Kanal und/oder der versenkte Kanal (220) ringförmig ist.

8. Formwerkzeug nach mindestens einem der vorgenannten Ansprüche, wobei der innere Kanal und/oder der versenkte Kanal (220) mindestens im Wesentlichen ringförmig ist und sich in Bezug auf die jeweilige Seitenwandplatte im Bereich von 320 bis 350 Grad in Umfangsrichtung erstreckt.

9. Formwerkzeug nach mindestens einem der vorgenannten Ansprüche, wobei der Einlass (222) mit einem Einlasskanal (240) verbunden ist und/oder der Auslass (224) mit einem Auslasskanal (250) verbunden ist.

10. Formwerkzeug nach Anspruch 9, wobei der Einlasskanal (240) und/oder der Auslasskanal (250) sich in einer Platte oder in der weiteren Platte (230) erstreckt.

11. Formwerkzeug nach mindestens einem der vorgenannten Ansprüche, wobei das Formwerkzeug (10) eine Vielzahl von Segmenten (12) umfasst, die so angeordnet sind, dass sie einen ringförmigen Hohlraum zur Formwerkzeugbehandlung eines Reifens bilden.

## Revendications

1. Moule comprenant une face interne (14) pour le moulage d'une bande de roulement de bandage pneumatique, le moule (10) comprenant une ou plusieurs plaques de flancs (210), dans lequel au moins une desdites plaques de flancs (210) comprend un canal évidé (220) possédant une entrée et une sortie (222, 224), ladite au moins une plaque de flanc (210) possédant une surface interne (218) qui entre en contact avec une surface d'une plaque supplémentaire (230), et dans lequel le canal évidé (220) et la surface de la plaque supplémentaire (230) forment un collecteur de fluide pour la circulation d'un milieu fluide dans ledit canal évidé (220), **caractérisé en ce que** la plaque de flanc (210) possède une surface de moule externe (212) correspondant à la zone de talon d'un bandage pneumatique cru lors de la vulcanisation dans le moule et **en ce que** la plaque de flanc (210) comprend une protubérance ou une fente de l'anneau de maintien de talon (214) et le canal évidé (220) est disposé à l'opposé de la protubérance ou de la fente de l'anneau de maintien de talon (214) de la plaque de flanc (210).

2. Moule selon la revendication 1, dans lequel le moule comprend deux plaques faisant office de parois latérales (210) sur les côtés opposés du moule (10),
(i) dans lequel les deux plaques faisant office de parois latérales (210) comprennent un canal évidé respectif (220) possédant une entrée et une sortie (222, 224), lesdites deux plaques faisant office de parois latérales (210) possédant chacune une surface interne (218) en contact avec une surface d'une plaque respective supplémentaire (230), le canal évidé respectif (220) et la surface de la plaque respective supplémentaire (230) formant un collecteur de fluide pour la circulation d'un milieu fluide dans le canal évidé respectif (220) ; ou
(ii) dans lequel une desdites deux plaques faisant office de parois latérales (210) comprend un canal interne possédant une entrée et une sortie (222, 224), ledit canal interne formant un collecteur de fluide pour la circulation d'un milieu fluide au sein de cette plaque faisant office de paroi latérale (210), et dans lequel l'autre plaque parmi lesdites deux plaques faisant office de parois latérales (210) comprend un canal évidé (220) possédant une entrée et une sortie (222, 224), ladite plaque faisant office de paroi latérale (210) possédant une surface interne (218) en contact avec une surface d'une plaque supplémentaire (230), le canal évidé (220) et la surface de la plaque supplémentaire (230) formant un collecteur de fluide pour la circulation d'un milieu fluide dans ledit canal évidé (220).

3. Moule selon au moins une des revendications précédentes, dans lequel le canal évidé (220) et la surface de la plaque supplémentaire (230) formant un passage annulaire renfermé pour le fluide.

4. Moule selon au moins une des revendications précédentes, dans lequel la plaque supplémentaire (230) possède une lèvre radiale (233) pour venir s'insérer dans une surface interne (218) de la plaque faisant office de paroi latérale (210).

5. Moule selon au moins une des revendications précédentes, dans lequel on prévoit un moyen d'étanchéité (246) entre la plaque faisant office de paroi latérale (210) et la plaque supplémentaire (230).

6. Moule selon au moins une des revendications précédentes, dans lequel ladite au moins une plaque faisant office de paroi latérale comprend un élément de plaque faisant office de paroi latérale et un élément d'anneau de maintien de talon (214) fixé à l'élément de la plaque faisant office de paroi latérale, et
(i) dans lequel l'élément de plaque faisant office de paroi latérale comprend un canal interne, ledit canal interne formant un collecteur de fluide pour la circulation d'un milieu fluide au sein de l'élément de plaque faisant office de paroi latérale ; et/ou
(ii) l'élément d'anneau de soutien de talon et/ou l'élément de plaque faisant office de paroi latérale comprend/comprennent un canal évidé possédant une entrée et une sortie, l'élément de plaque faisant office de paroi latérale possédant une surface en contact avec une surface de l'élément de soutien de talon, le canal évidé formant un collecteur de fluide pour la circulation d'un milieu fluide.

7. Moule selon au moins une des revendications précédentes, dans lequel le canal interne et/ou le canal évidé (220) est de configuration annulaire.

8. Moule selon au moins une des revendications précédentes, dans lequel le canal interne et/ou le canal évidé (220) est de configuration annulaire et s'étend en direction circonférentielle par rapport à la plaque respective faisant office de paroi latérale dans la plage de 320 à 350 degrés.

9. Moule selon au moins une des revendications précédentes, dans lequel l'entrée (222) est reliée à un canal d'entrée (240) et/ou la sortie (224) est reliée à un canal de sortie (250).

10. Moule selon la revendication 9, dans lequel le canal d'entrée (240) et/ou le canal de sortie (250) s'étend au sein d'une plaque ou au sein de la plaque supplémentaire (230).

11. Moule selon au moins une des revendications précédentes, dans lequel le moule (10) comprend plusieurs segments (12) arrangés pour former une cavité annulaire pour le moulage d'un bandage pneumatique.
